# EUROPEAN PATENT SPECIFICATION

(11) **EP 0 485 216 B1**
(45) Date of publication and mention of the grant of the patent: **07.02.1996**
(21) Application number: 91310319.8
(22) Date of filing: 07.11.1991
(51) Int. Cl.: G02F 1/1335, G02F 1/1343, G09G 3/36

(54) **Liquid-crystal colour display**
Flüssigkristallfarbanzeige
Afficheur en couleurs à cristal liquide

(30) Priority: 07.11.1990 JP 303077/90
(43) Date of publication of application: 13.05.1992
(73) Proprietor: SHARP KABUSHIKI KAISHA, Osaka 545 (JP)
(72) Inventor: Shioji, Mitsuaki, Nara-shi, Nara-ken (JP); Ito, Kunihiko, Yamatokoriyama-shi, Nara-ken (JP); Fukutani, Hiroshi, Nara-shi, Nara-ken (JP); Akimoto, Kazuhiko, Nara-shi, Nara-ken (JP)
(74) Representative: Brown, Kenneth Richard

(56) References cited:
- EP-A- 0 219 064
- EP-A- 0 317 850
- US-A- 4 902 103
- PATENT ABSTRACTS OF JAPAN vol. 12, no. 298 (P-744)(3145) 15 August 1988 & JP-A-63 070 828

## Description

### BACKGROUND OF THE INVENTION

### 1. FIELD OF THE INVENTION

The present invention relates to a colour liquid crystal display.

### 2. DESCRIPTION OF THE PRIOR ART

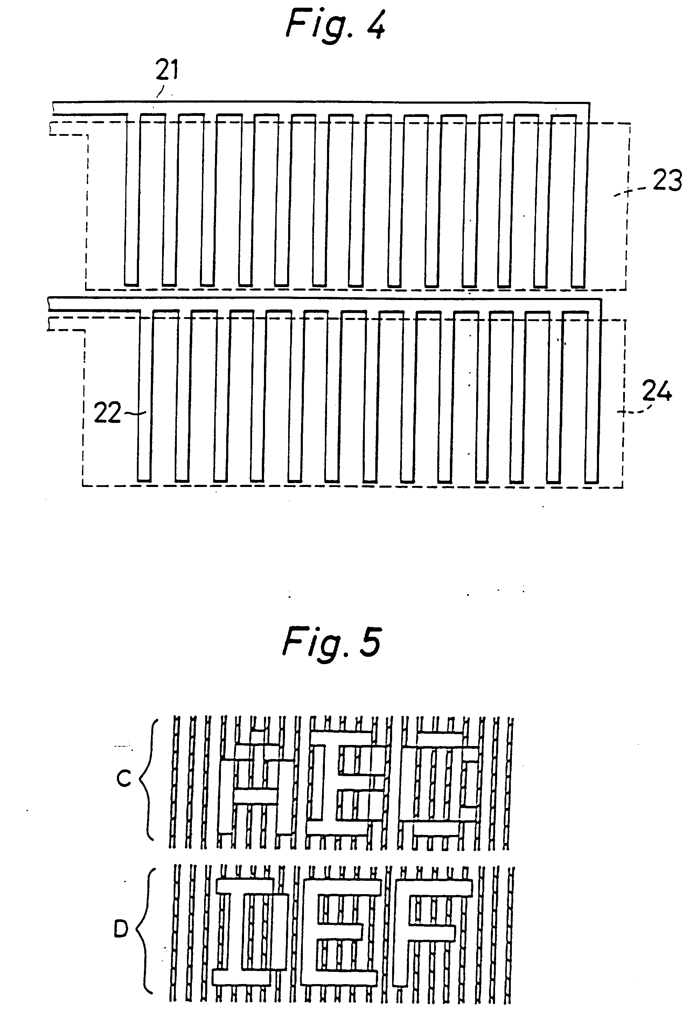

It is known to provide a colour liquid crystal display in which, as shown in Fig.4, display patterns are formed by portions where transparent comb electrodes 21 and 22 on the SEG (segment) side, serving as display electrodes, overlap transparent electrodes 23 and 24 on the COM (common) side, respectively. Each element of the SEG-side display electrode 21 faces a red color filter (not shown), while each element of SEG-side display electrode 22 faces a green color filter (not shown). The display patterns are independent, the comb electrodes being individually connected to different signal lines.

In the above prior art colour liquid crystal display, however, as shown in Fig.5, the display area C where display patterns are defined by the SEG-side display electrode 21 is separated from the display area D where display patterns are defined by the SEG-side display electrode 22, and the display areas C and D cannot be brought in contact with each other or made to overlap. It is therefore not possible to make a plurality of display patterns overlap each other within one display area, the resulting problem being an inability to further increase the number of display patterns per unit display area.

### SUMMARY OF THE INVENTION

It is accordingly an object of the invention to provide a colour liquid crystal display which permits a plurality of predetermined display patterns to overlap each other within one display area and thereby achieves an increase in the number of display patterns per unit display area.

According to the present invention, a colour liquid crystal display comprises:
a plurality of colour selection members for transmitting light of specific colours respectively and extending over an entire display region of the device;
first display electrodes defining a first predetermined image pattern to be displayed in a first display area of said region, said first display electrodes arranged in correspondence with ones of the colour selection members which select a first colour; and
second display electrodes defining a second predetermined image pattern to be displayed in a second display area of said region, said second display electrodes arranged in correspondence with ones of the colour selection members which select a second colour;
wherein said first and second display areas overlap each other only partially in a boundary region in which portions of the first and second display electrodes are arranged so as to extend into each other's display area in an alternating fashion.

According to the present invention, since the display electrodes disposed adjacent to each other are formed extending into each other's display area in alternating fashion, display patterns formed by the adjacent display electrodes are made to overlap each other within one display area. Therefore, the number of display patterns per unit display area can be increased.

### BRIEF DESCRIPTION OF THE DRAWINGS

Fig.1 is a detail drawing of an essential portion of a colour liquid crystal display in one embodiment of the invention;
Fig.2 is a diagram showing how display areas overlap each other in the embodiment;
Fig.3 is a plan view showing colour filters and a mask in accordance with the embodiment;
Fig.4 is a detail drawing of an essential portion of a prior art colour liquid crystal display; and
Fig.5 is a drawing showing display areas in the prior art colour liquid crystal display.

### DETAILED DESCRIPTION OF THE PREFERRED EMBODIMENT

Now referring to the drawings, the preferred embodiment of the invention is described below.

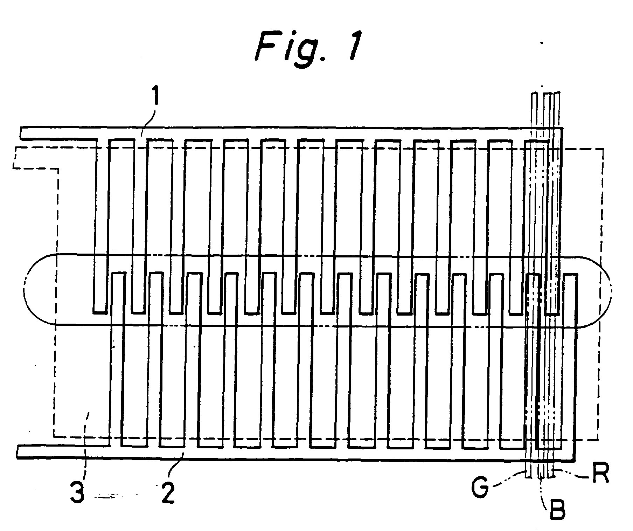

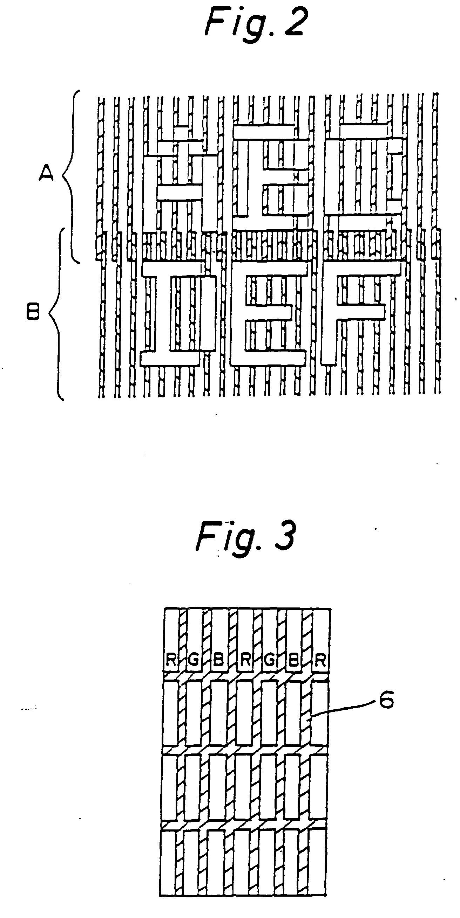

As shown in Fig.1, in this embodiment, transparent comb electrodes 1 and 2, formed on the SEG-side and serving as display electrodes, are disposed facing a red colour filter R and a green colour filter G, respectively. The reference sign B indicates a blue colour filter. Two light-transmitting substrates, one on the SEG side and the other on the COM side, are disposed opposite each other sandwiching a liquid crystal layer (not shown) therebetween. The colour filters, red R, green G, and blue B, are disposed over one entire surface of the SEG-side light-transmitting substrate,that is the surface facing the liquid crystal layer. The SEG-side transparent comb electrodes 1 and 2 are formed on the liquid crystal layer side of the SEG-side light-transmitting substrate. The SEG-side transparent comb electrodes 1 and 2 are arranged extending into each other's area in alternating fashion. Also, the SEG-side transparent electrodes 1 and 2 share a COM-side electrode 3 disposed opposite them across the liquid crystal layer (not shown) and form two different display patterns, upper and lower, respectively driven independently of each other. In Fig.3 there is shown a mask 6 which serves as a light-blocking member formed extending between the colour filters R, G, B.

In this embodiment, production of the above display patterns is achieved by applying varying voltages to the SEG-side transparent comb electrodes 1, 2 and the COM-Side electrode 3 and thereby varying the molecular alignment in the liquid crystal layer. Also, in this embodiment, overlapping portions 5 are formed where the display area defined by the SEG-side transparent electrode 1 overlaps the display area defined by the SEG-side transparent electrode 2. That is, in the colour liquid crystal display of this embodiment, since the display area A, where the red display pattern defined by the SEG-side transparent electrode 1 is formed, overlaps the display area B where the green display area defined by the SEG-side transparent electrode 2 is formed, the number of display patterns per unit display area can be increased.

The invention may be embodied in other specific forms without departing from the scope thereof as defined by the claims.

## Claims

1. A colour liquid crystal display comprising: a plurality of colour selection members (R,G,B) for transmitting light of specific colours respectively and extending over an entire display region of the device;
first display electrodes (1) defining a first predetermined image pattern to be displayed in a first display area of said region, said first display electrodes arranged in correspondence with ones of the colour selection members which select a first colour; and
second display electrodes (2) defining a second predetermined image pattern to be displayed in a second display area of said region, said second display electrodes arranged in correspondence with ones of the colour selection members which select a second colour;
wherein said first and second display areas overlap each other only partially in a boundary region (5) in which portions of the first and second display electrodes are arranged so as to extend into each other's display area in an alternating fashion.

2. A colour liquid crystal display according to claim 1, wherein the first and second display electrodes (1,2) each have the form of a comb, the end portions of the teeth of which are interleaved in said boundary region (5).

3. A colour liquid crystal display according to claim 1 or claim 2, wherein the first and second display electrodes (1,2) are opposed by the same common electrode (3).

4. A colour liquid crystal display according to any of claims 1 to 3, wherein a light-blocking member (6) is interposed between the adjacent colour selection members.

5. A colour liquid crystal display according to any of claims 1 to 4, wherein the colour selection members are colour filters selecting three colours, red (R), green (G) and blue (B).

## Patentansprüche

1. Flüssigkristall-Farbanzeige mit
- mehreren Farbauswahlteilen (R, G, B) zum jeweiligen Durchlassen von Licht spezieller Farben, die sich über das gesamte Anzeigegebiet der Vorrichtung erstrecken;
- ersten Anzeigeelektroden (1), die ein erstes, vorgegebenes Bildmuster festlegen, das in einem ersten Anzeigebereich des Gebiets anzuzeigen ist, wobei diese ersten Anzeigeelektroden in Entsprechung zu Farbauswahlteilen angeordnet sind, die eine erste Farbe auswählen; und
- zweiten Anzeigeelektroden (2), die ein zweites, vorgegebenes Bildmuster festlegen, das in einem zweiten Anzeigebereich des Gebiets anzuzeigen ist, wobei diese zweiten Anzeigeelektroden in Entsprechung zu Farbauswahlteilen angeordnet sind, die eine zweite Farbe auswählen;
- wobei der erste und der zweite Anzeigebereich einander nur teilweise in einem Grenzgebiet (5) überlappen, in dem Abschnitte der ersten und der zweiten Anzeigeelektrode so angeordnet sind, daß sie sich auf abwechselnde Weise jeweils in den anderen Anzeigebereich hinein erstrecken.

2. Flüssigkristall-Farbanzeige nach Anspruch 1, bei der die erste und zweite Anzeigeelektrode (1, 2) jeweils Kammform aufweisen, wobei die Endabschnitte der Zähne derselben im Grenzgebiet (5) verzahnt sind.

3. Flüssigkristall-Farbanzeige nach Anspruch 1 oder Anspruch 2, bei der dieselbe Elektrode (3) für gemeinsame Masse der ersten und zweiten Anzeigeelektrode (1, 2) gegenübersteht.

4. Flüssigkristall-Farbanzeige nach einem der Ansprüche 1 bis 3, bei der ein Lichtsperrteil (6) zwischen benachbarte Farbauswahlteile eingefügt ist.

5. Flüssigkristall-Farbanzeige nach einem der Ansprüche 1 bis 4, bei der die Farbauswahlteile Farbfilter sind, die drei Farben auswählen, nämlich rot (R), grün (G) und blau (B).

## Revendications

1. Dispositif d'affichage en couleurs à cristaux liquides comportant:
une pluralité d'éléments de sélection de couleur (R, V, B), pour transmettre respectivement une lumière de couleur spécifique, s'étendant sur tout un secteur d'affichage du dispositif;
des premières électrodes d'affichage (1) définissant un premier motif d'image prédéterminé à afficher dans une première zone d'affichage dudit secteur, lesdites premières électrodes d'affichage étant en correspondance avec ceux des éléments de sélection de couleur qui sélectionnent une première couleur; et
des secondes électrodes d'affichage (2) définissant un second motif d'image prédéterminé à afficher dans une seconde zone d'affichage dudit secteur, lesdites secondes électrodes d'affichage étant en correspondance avec ceux des éléments de sélection de couleur qui sélectionnent une seconde couleur;
dans lequel lesdites première et seconde zones d'affichage se recouvrent seulement partiellement dans une zone frontière (5) dans laquelle des parties des premières et secondes électrodes d'affichage sont disposées de façon à s'étendre dans les zones d'affichage les unes des autres de manière alternée.

2. Dispositif d'affichage en couleurs à cristaux liquides selon la revendication 1, dans lequel les premières et secondes électrodes d'affichage (1, 2) ont la forme d'un peigne dont les extrémités des dents sont intercalées dans ladite zone frontière (5).

3. Dispositif d'affichage en couleurs à cristaux liquides selon la revendication 1 ou 2, dans lequel les premières et secondes électrodes d'affichage (1, 2) sont placées face à la même électrode masse (3).

4. Dispositif d'affichage en couleurs à cristaux liquides selon l'une quelconque des revendications 1 à 3, dans lequel un élément formant écran à la lumière (6) est interposé entre les éléments de sélection de couleur adjacents.

5. Dispositif d'affichage en couleurs à cristaux liquides selon l'une quelconque des revendications 1 à 4, dans lequel les éléments de sélection de couleur sont des filtres de couleurs sélectionnant trois couleurs, le rouge (R), le vert (V) et le bleu (B).
